# EUROPEAN PATENT APPLICATION

(11) **EP 4 310 451 A1**
(43) Date of publication of application: **24.01.2024**
(21) Application number: 22206149.1
(22) Date of filing: 08.11.2022
(51) Int. Cl.: G01C 21/34, G01C 21/36, G08G 1/005

(54) **SYSTEM, APPARATUS AND METHOD FOR PROVIDING INTEGRATED NAVIGATION SERVICE FOR CAR, PERSONAL MOBILITY VEHICLE AND PEDESTRIAN**

(30) Priority: 19.07.2022 KR 20220089119
(71) Applicant: Mobiligent Inc., Gyeongsangbuk-do 37673 (KR)
(72) Inventor: KIM, Euiseok, 03730 Seoul (KR); KIM, Duksoo, 03747 Seoul (KR); SIM, Sanggyoo, 06939 Seoul (KR); LEE, Jung Won, 13643 Gyeonggi-do (KR); LEE, Jongguk, 16582 Gyeonggi-do (KR); CHUNG, Kyuhong, 06091 Seoul (KR)
(74) Representative: Schmitt-Nilson Schraud Waibel Wohlfrom Patentanwälte Partnerschaft mbB

(57) **Abstract**

Disclosed are a system, an apparatus, and a method for providing an integrated navigation service for a car, a personal mobility vehicle, and a pedestrian and according to an exemplary embodiment of the present disclosure, an integrated navigation service providing method for a car, a mobility, and a pedestrian may include (a) receiving a route providing request including a moving type and a destination of the user from a user terminal of the user, (b) transmitting route information to reach the destination in consideration of the moving type to the user terminal, (c) acquiring location information of the user who moves along the route information, and (d) providing at least one of the location information, signal information related to the route information, and information about an object which affects the movement of the user according to the route information, by means of the user terminal.

## Description

### CROSS-REFERENCE TO RELATED APPLICATIONS

This application claims the priority of Korean Patent Application No. 10-2022-0089119 filed on July 19, 2022, in the Korean Intellectual Property Office, the disclosure of which is incorporated herein by reference.

### BACKGROUND

### Field

The present disclosure relates to a system, an apparatus, and a method for providing an integrated navigation service for a car, a mobility, and a pedestrian.

### Description of the Related Art

An in-vehicle navigation service which guides a driving route of a car using a mobile communication terminal and an intelligence transport system (ITS) terminal is becoming increasingly sophisticated. Generally, the in-vehicle navigation service is a service that when a navigation terminal including the mobile communication terminal and the intelligent traffic information terminal is mounted in the car and a user inputs destination and departure information to request route information, an information center which receives the destination and the departure information via the mobile communication network searches for an optimal route and then transmits the route information to the navigation terminal. The route information transmitted to the navigation terminal is output as the car is driven to allow the user to drive with reference to the route information.

In the meantime, the current navigation service is mainly focused on providing the service to the car so that map data for route guidance held by the information center is implemented mainly for roads on which the car is capable of being driven, that is, driveways. In accordance with the generalization of the mobile communication terminal, not only car drivers, but also pedestrians or people who move using public transportation also need navigation services to easily find their desired destinations. By reflecting this need, a service that when a departure point and a current location information are input, searches and provides route information using a means other than the direct driving of the car is also actively applied.

However, a platform which integrally provides the above-described in-vehicle navigation service and a navigation service provided for moving means other than the car, such as walking, has not yet been introduced. Therefore, it is required to develop a navigation service which integrally provides warning information to various moving subjects so as to allow pedestrians and drivers to recognize dangerous situations at the intersections.

Moreover, the conventional navigation service for walking simply provides limited route information to reach a destination using walking and a typical public transportation such as buses or subways, but is limited in providing a route guidance when various types of personal mobility which are actively utilized as moving means in recent years are adopted as moving means.

A related art of the present disclosure is disclosed in Korean Registered Patent Publication No. 10-1752821.

### SUMMARY

An object of the present disclosure is to solve the problem of the related art and provide a system, an apparatus, and a method for providing an integrated navigation service for a car, a mobility, and a pedestrian which display route information in consideration of a moving type of a user and collectively guide signal information associated with intersections and crosswalk signals on the route and information about an object which affects the movement of the user.

However, objects to be achieved by various embodiments of the present disclosure are not limited to the technical objects as described above and other technical objects may be present.

As a technical means to achieve the above-described technical object, according to an aspect of the present disclosure, an integrated navigation service providing method for a car, a mobility, and a pedestrian includes (a) receiving a route providing request including a moving type and a destination of the user from a user terminal of the user; (b) transmitting route information to reach the destination in consideration of the moving type to the user terminal; (c) acquiring location information of the user who moves along the route information; and (d) providing at least one of the location information, signal information related to the route information, and information about an object which affects the movement of the user according to the route information, by means of the user terminal.

Further, the moving type includes a first type corresponding to movement by walking and using a personal mobility and a second type corresponding to movement by a car.

Further, when the moving type is the first type and the location information corresponds to an entering location of a crosswalk included in the route information, in step (d), walking signal information associated with the crosswalk is provided to the user terminal.

Further, the walking signal information includes first display information including a crossing signal or a stop signal for the crosswalk and left time information to a time when the crossing signal and the stop signal are switched.

Further, the step (d) includes: outputting a first warning signal by means of the user terminal when it is determined that the user enters the crosswalk in a state in which the stop signal is displayed based on the walking signal information and the location information.

Further, the step (d) includes: outputting a second warning signal by means of the user terminal when it is determined that the car passes the crosswalk in a state in which the user has entered the crosswalk based on the location information and driving state information of the car of the other user corresponding to the second type.

Further, when the moving type is the second type and the location information corresponds to a proximate location to a crosswalk included in the route information, in step (d), driving signal information associated with the crosswalk is provided to the user terminal.

Further, the driving signal information includes at least one of left distance information to the crosswalk, expected arrival time information to the crosswalk, second display information about a road associated with the crosswalk, and left time information to a time when the crossing signal and the stop signal of the crosswalk are switched.

Further, the step (d) includes outputting a third warning signal by means of the user terminal when the other user has already entered the crosswalk or is determined to enter the crosswalk in a state in which the car of the user approaches the crosswalk, based on the second display information, the location information, and movement state information of the other user corresponding to the first type.

Further, when the moving type is the first type, in step (b), the route information including information about a personal mobility rental available location is provided.

In the meantime, according to another aspect of the present disclosure, an integrated navigation service providing apparatus for a car, a mobility, and a pedestrian includes a request input unit which receives a route providing request including a moving type and a destination of the user from a user terminal of the user; a route providing unit which transmits route information to reach the destination in consideration of the moving type to the user terminal; a location information acquiring unit which acquires location information of the user who moves along the route information; and an event informing unit which provides at least one of the location information, signal information related to the route information, and information about an object which affects the movement of the user according to the route information, by means of the user terminal.

When the moving type is a first type corresponding to movement by walking and using a personal mobility and the location information corresponds to an entering location of a crosswalk included in the route information, the event informing unit provides walking signal information associated with the crosswalk to the user terminal.

When the moving type is a second type corresponding to movement by a car and the location information corresponds to a proximate location of a crosswalk included in the route information, the event informing unit provides driving signal information associated with the crosswalk to the user terminal.

In the meantime, according to another aspect of the present disclosure, an integrated navigation system for a car, a mobility, and a pedestrian, includes a first user terminal of a first user who moves according to a first moving type corresponding to movement by walking and using a personal mobility; a second user terminal of a second user who moves according to a second moving type corresponding to movement by a car; and a navigation service providing apparatus which receives a route providing request including destinations of the first user and the second user to transmit route information to reach the destination to the first user terminal and the second user terminal, acquires location information of the first user and the second user who move along the route information, and provides at least one of the location information, signal information related to the route information, and information about an object which affects the movement of the first user and the second user to the first user terminal and the second user terminal.

The above-described solving means are merely illustrative but should not be construed as limiting the present disclosure. In addition to the above-described embodiments, additional embodiments may be further provided in the drawings and the detailed description of the present disclosure.

According to the above-described solving means of the present disclosure, it is possible to provide a system, an apparatus, and a method for providing an integrated navigation service for a car, a mobility, and a pedestrian which display route information in consideration of a moving type of a user and collectively guide signal information associated with intersections and a crosswalk signal on the route and information about an object which affects the movement of the user.

However, the effect which can be achieved by the present disclosure is not limited to the above-described effects, there may be another effects.

### BRIEF DESCRIPTION OF THE DRAWINGS

The above and other aspects, features and other advantages of the present disclosure will be more clearly understood from the following detailed description taken in conjunction with the accompanying drawings, in which:
FIG. 1 is a schematic diagram of an integrated navigation system including an integrated navigation service providing apparatus for a car, a mobility, and a pedestrian according to an exemplary embodiment of the present disclosure;
FIG. 2 is a view exemplary illustrating an interface for inputting a route providing request including a moving type and a destination;
FIG. 3 is a view exemplary illustrating an interface for displaying summary information about route information provided to a user terminal in response to a route providing request;
FIG. 4 is a view exemplary illustrating an interface for displaying detailed route information provided to a controller terminal;
FIG. 5 is a view exemplary illustrating an interface for displaying detailed route information provided to a first user terminal;
FIG. 6A is a view exemplary illustrating an interface for displaying walking signal information on a first user terminal when a pedestrian stop signal is applied to a predetermined crosswalk;
FIG. 6B is a view exemplary illustrating an interface for displaying driving signal information on a second user terminal when a pedestrian stop signal is applied to a predetermined crosswalk;
FIG. 7A is a view exemplary illustrating an interface for displaying walking signal information on a first user terminal when a pedestrian crossing signal is applied to a predetermined crosswalk;
FIG. 7B is a view exemplary illustrating an interface for displaying driving signal information on a second user terminal when a pedestrian crossing signal is applied to a predetermined crosswalk;
FIG. 8A is a view exemplary illustrating an interface for outputting a first warning signal through a first user terminal;
FIG. 8B is a view exemplary illustrating an interface for outputting a third warning signal through a second user terminal;
FIG. 9 is a view exemplary illustrating an interface output through a first user terminal to handle the rental of a personal mobility;
FIG. 10 is a schematic diagram of an integrated navigation service providing apparatus for a car, a mobility, and a pedestrian according to an exemplary embodiment of the present disclosure; and
FIG. 11 is an operation flowchart of an integrated navigation service providing method for a car, a mobility, and a pedestrian according to an exemplary embodiment of the present disclosure.

### DETAILED DESCRIPTION OF THE EMBODIMENT

Hereinafter, the present disclosure will be described more fully hereinafter with reference to the accompanying drawings, in which exemplary embodiments of the present disclosure are shown. However, the present disclosure can be realized in various different forms, and is not limited to the embodiments described herein. Accordingly, in order to clearly explain the present disclosure in the drawings, portions not related to the description are omitted. Like reference numerals designate like elements throughout the specification.

Throughout this specification and the claims that follow, when it is described that an element is "coupled" to another element, the element may be "directly coupled" to the other element or "electrically coupled" or "indirectly coupled" to the other element through a third element.

Through the specification of the present disclosure, when one member is located "on", "above", "on an upper portion", "below", "under", and "on a lower portion" of the other member, the member may be adjacent to the other member or a third member may be disposed between the above two members.

In the specification of the present disclosure, unless explicitly described to the contrary, the word "comprise" and variations such as "comprises" or "comprising", will be understood to imply the inclusion of stated elements but not the exclusion of any other elements.

The present disclosure relates to a system, an apparatus, and a method for providing an integrated navigation service for a car, a mobility, and a pedestrian.

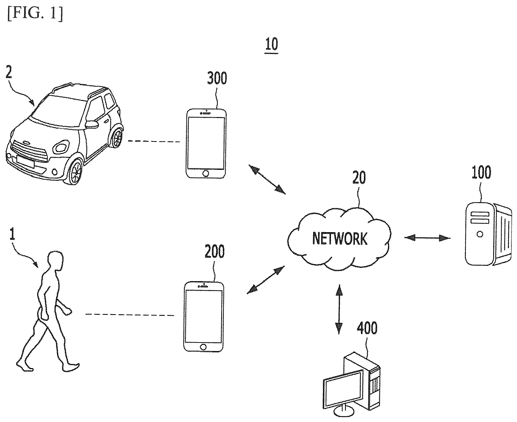

FIG. 1 is a schematic diagram of an integrated navigation system including an integrated navigation service providing apparatus for a car, a mobility, and a pedestrian according to an exemplary embodiment of the present disclosure.

Referring to FIG. 1, an integrated navigation system 10 according to an exemplary embodiment of the present disclosure may include an integrated navigation service providing apparatus 100 (hereinafter, referred to as a "service providing apparatus 100") for a car, a mobility, and a pedestrian according to an exemplary embodiment of the present disclosure, a first user terminal 200, a second user terminal 300, and a controller terminal 400.

The service providing apparatus 100, the first user terminal 200, the second user terminal 300, and the controller terminal 400 may communicate with each other via a network 20. The network 20 means a connection structure which allows information exchange between nodes such as terminals or servers. Examples of the network 20 include a 3rd generation partnership project (3GPP) network, a long term evolution network (LTE), a 5G network, a world interoperability for microwave access (WIMAX) network, Internet, a local area network (LAN), a wireless local area network (wireless LAN), a wide area network (WAN), a personal area network (PAN), a Wi-Fi network, a Bluetooth network, a satellite broadcasting network, an analog broadcasting network, and a digital multimedia broadcasting (DMB) network, but are not limited thereto.

For example, the user first terminal 200, the second user terminal 300 and/or the controller terminal 400 may include all kinds of wireless communication devices such as a smart phone, a smart pad, a tablet PC, a personal communication system (PCS), a global system for mobile communication (GSM), a personal digital cellular (PDC), a personal handyphone system (PHS), a personal digital assistant (PDA), an international mobile telecommunication (IMT)-2000, a code division multiple access (CDMA)-2000, a W-code division multiple access (W-CDMA), and a wireless broadband internet (Wibro) terminal.

In the meantime, in the description of the exemplary embodiment of the present disclosure, the first user terminal 200 refers to a user terminal held by a user who receives route information to a predetermined destination using a moving method (in other words, a method using a moving means such as walking, personal mobility, or public transportation), other than a moving method using a car 2, from the service providing apparatus 100. The second user terminal 300 may refer to a user terminal held by a user who receives route information to a predetermined destination using a moving method using a car 2 from the service providing apparatus 100. However, the first user terminal 200 and the second user terminal 300 may be relatively distinguished according to a moving type adopted by the user.

Specifically, for example, when a specific user moves by walking, the user terminal which is held by the user while walking to check route information is the first user terminal 200 and the same user terminal which is held by the user who drives the car 2 to move may be understood as the second user terminal 300.

For reference, in the description of the exemplary embodiment of the present disclosure, the controller terminal 400 may be a terminal held by a subject who integrally checks and controls location information and state information for each of the plurality of users who is provided with the route information and event information by the service providing apparatus 100 disclosed in the present disclosure, such as a pedestrian, a rider of the personal mobility, and a car driver, in a specific regional range. With regard to this, the controller terminal 400 may be a terminal type including a larger display area than the first user terminal 200 and the second user terminal 300 to collectively identify location information and state information (for example, whether a pedestrian 1 is waiting/entering a crosswalk, driving data of the car 2, whether to follow regulations, whether to approach/enter intersection/crosswalk) of each of the plurality of users located in a specific regional range, but is not limited thereto.

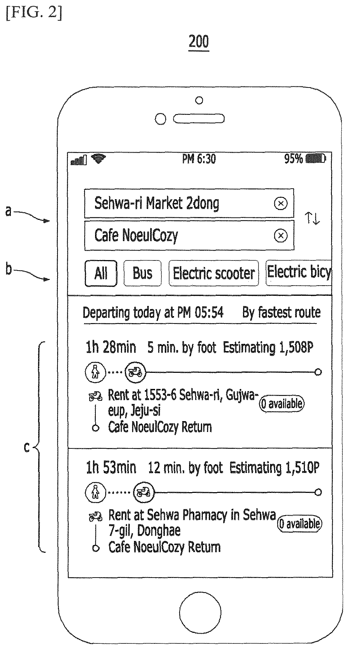

Hereinafter, an exemplary embodiment that the service providing apparatus 100 provides route information to arrive at a predetermined destination to the user terminals 200 and 300 will be described with reference to FIGS. 2 to 5.

FIG. 2 is a view exemplary illustrating an interface for inputting a route providing request including a moving type and a destination.

Referring to FIG. 2, the service providing apparatus 100 may receive a route providing request including a moving type and a destination of the user from the user terminals 200 and 300.

To be more specific, referring to FIG. 2, the service providing apparatus 100 may provide a route providing request interface including an entry item (a in FIG. 2) for inputting a departure point and a destination for which the information wants to be received and an entry item (b in FIG. 2) for selecting a moving type of the user to the user terminals 200 and 300.

Further, referring to FIG. 2, the service providing apparatus 100 may provide a list of candidate route information (c in FIG. 2) from the departure point to the destination based on the departure information, the destination information, and information about a moving type input from the user terminals 200 and 300. With regard to this, the user of the user terminals 200 and 300 may apply a user input to select any one from the list of candidate route information to set route information to move. For example, in the list of candidate route information, information about an expected moving time according to each route information, a moving distance/time according to the moving method (walking or riding on the personal mobility), an expected consumed cost, and information about a reward (mileage or points) operated on the integrated navigation system 10 which is paid to the user when the movement is completed according to the route information may be displayed for every candidate route.

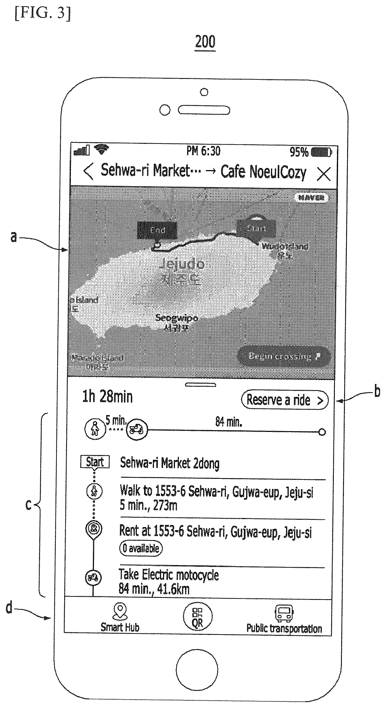

FIG. 3 is a view exemplary illustrating an interface for displaying summary information about route information provided to a user terminal in response to a route providing request.

Referring to FIG. 3, when predetermined route information is determined from the candidate route list based on the user input applied to the user terminals 200 and 300, the service providing apparatus 100 may provide a summary interface including a map display area (a in FIG. 3) in which corresponding route information is displayed on the map, a user input item (b in FIG. 3) for requesting a reservation for personal mobility or public transportation included in the route information, and time-series detailed route information displaying area (c in FIG. 3) of the route information to the user terminals 200 and 300.

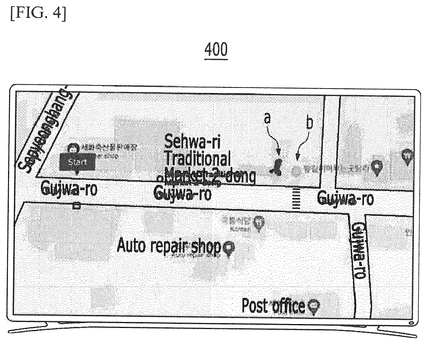

FIG. 4 is a view exemplary illustrating an interface for displaying detailed route information provided to a controller terminal.

Referring to FIG. 4, the service providing apparatus 100 may provide the controller interface on which location information (a in FIG. 4) of the user who moves along the route information provided by the service providing apparatus 1000 and information about a predetermined reference location (b in FIG. 4) on the route information provided to the user are displayed to overlap on the map for a target area in the target area to the controller terminal 400. For example, in the case of a user who moves with a first moving type corresponding to the movement by walking or using a personal mobility, the predetermined reference location displayed to overlap on the controller interface may be determined in detail to be an entering location of the crosswalk or a rental available location of the personal mobility.

With regard to this, the service providing apparatus 100 may operate to separately provide route information according to a moving type including a first type corresponding to the movement by the walking and using the personal mobility and a second type corresponding to the movement by the car 2. With regard to this, the route information according to the first type may be set by a route including a sidewalk, a crosswalk, and a road area corresponding to some lanes depending on the type of the personal mobility on which the user rides and the route information according to the second type may be set by a route including a driveway.

Further, the service providing apparatus 100 may acquire location information of the user who moves along the set route information. For example, the service providing apparatus 100 receives terminal positioning information such as GPS information or cell information acquired by the user terminals 200 and 300 from the user terminals 200 and 300 to acquire the location information of the user. As another example, when the moving type of the user is a second type by the car, the service providing apparatus 100 interworks with the second user terminal 300 and may acquire location information of the car from an in-vehicle terminal (not illustrated) provided in the car 2 on which the user rides.

Hereinafter, for the convenience of description, a user corresponding to a first moving type is referred to as a first user, a user terminal held (carried) by the first user is referred to as a first user terminal 200, a user corresponding to a second moving type is referred to as a second user, and a user terminal held (carried) by the second user is referred to as a second user terminal 300.

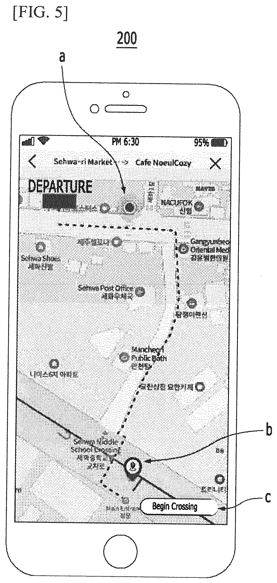

FIG. 5 is a view exemplary illustrating an interface for displaying detailed route information provided to a first user terminal.

Referring to FIG. 5, the service providing apparatus 100 may display current location information (a in FIG. 5) of the first user, a route mark (a dotted line in FIG. 5), a rental available location of a personal mobility (b in FIG. 5), a public transportation riding location, access/cross state information (c in FIG. 5) of a user on the crosswalk on the route information on a map based route guidance interface including the current location of the first user to the first user terminal 200. For reference, the "personal mobility" in the description of the exemplary embodiment of the present disclosure may broadly include electric skateboards, general bicycles, electric bicycles, and electric scooters.

With regard to this, the service providing apparatus 100 may previously acquire and hold location information about the personal mobility which is an object of a mobility rental service provided by a mobility operator which has previously entered into an alliance with an operating entity of the integrated navigation system 10, information about an occupied state, information about a charging state from an operating server of the mobility operator to provide information about a personal mobility available on the route to the destination of the user on the route information.

Further, referring to the reference character c in FIG. 5, when it is determined that the location information of the first user corresponds to an entering location of the crosswalk included in the route information or is within a predetermined distance from the entering location, the service providing apparatus 100 activates a notice to inform that crossing the crosswalk is necessary on the route guidance interface to draw the attention of the first user to allow the first user to safely cross the crosswalk while watching the surrounding cars.

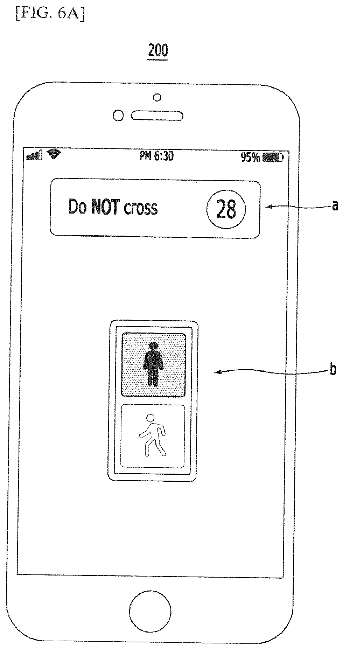

Hereinafter, an exemplary embodiment that the service providing apparatus 100 provides information about an object affecting the movement of the user on the road on which the user is moving and signal information associated with roads, sidewalks, crosswalks on the route to the user terminals 200 and 300 will be described in detail with reference to FIGS. 6A to 8B.

Referring to FIGS. 6A to 8B, the service providing apparatus 100 may provide at least one of the location information of the user, signal information related to the route information on which the user is moving, and information about an object which affects the movement of the user according to the route information through the user terminals 200 and 300.

FIG. 6A is a view exemplary illustrating an interface for displaying walking signal information on a first user terminal when a pedestrian stop signal is applied to a predetermined crosswalk.

Referring to FIG. 6A, when the location information of the first user corresponds to an entering location of the crosswalk included in the route information, the service providing apparatus 100 may provide walking signal information associated with the crosswalk on which the first user is located to the first user terminal 200.

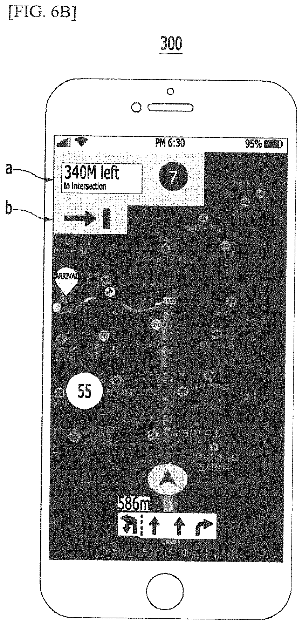

Specifically, referring to FIG. 6A, the service providing apparatus 100 may provide walking signal information including first display information (b in FIG. 6A) including a crossing signal or a stop signal of the crosswalk where the first user is located and left time information (a in FIG. 6B) until a time when the crossing signal and the stop signal are switched.

In the meantime, according to the exemplary embodiment of the present disclosure, when the first user arrives at the entering location of the crosswalk, the service providing apparatus 100 stops displaying the map based guidance interface described above with reference to FIG. 5 and switches an interface displayed on the display of the first user terminal 100 to an walking signal information display interface illustrated in FIG. 6A to call a first user's attention to induce the first user to focus on safely crossing the crosswalk while checking the walking signal information.

Further, referring to the reference character a in FIG. 6A, when the stop signal is displayed for the crosswalk, the service providing apparatus 100 may express a warning informing so as not to cross the crosswalk (for example, a text warning "Do NOT cross"), on the walking signal display interface.

FIG. 6B is a view exemplary illustrating an interface for displaying driving signal information on a second user terminal when a pedestrian stop signal is applied to a predetermined crosswalk.

Referring to FIG. 6B, when the location information of the second user corresponds to a proximate location to the crosswalk included in the route information (for example, the crosswalk is located in a forwarding direction on the driving route, and an arrival distance to the closest crosswalk is a predetermined threshold distance or within a threshold arrival time), the service providing apparatus 100 may provide driving signal information associated with the crosswalk to the second user terminal 300.

To be more specific, referring to FIG. 6B, the service providing apparatus 100 may provide driving signal information including at least one of left distance information ("340 m" denoted by the reference character a in FIG. 6B), expected arrival time information to the crosswalk, second display information (denoted by b in FIG. 6B) about a road associated with the crosswalk, and left time information (information represented by a number "7" displayed at the right side by a in FIG. 6B) until the crossing signal and the stop signal of the crosswalk are switched to the second user terminal 300.

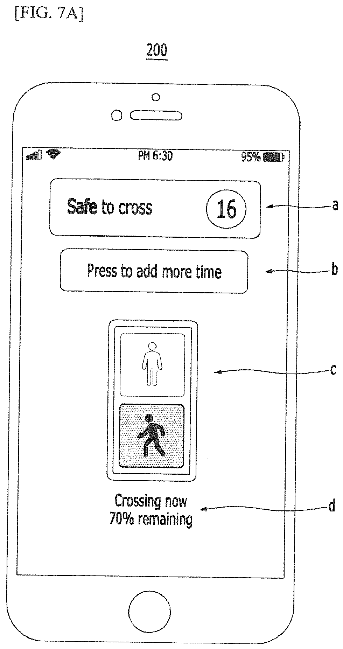

FIG. 7A is a view exemplary illustrating an interface for displaying walking signal information on a first user terminal when a pedestrian crossing signal is applied to a predetermined crosswalk.

Referring to FIG. 7A, when the first display information of the crosswalk where the user is located is a crossing signal (a safe-to-cross signal or a green light signal), the service providing apparatus 100 may provide first display signal (c in FIG. 7A) including a crossing signal or a stop signal for the crosswalk where the first user is located, left time information (a in FIG. 7A) until the crossing signal and the stop signal of the crosswalk are switched, a guide inducing to cross the crosswalk (for example, a text guide such as "Safe to cross"), a user input item (b of FIG. 7A) to extend a crossing time of the crosswalk, and a crossing progress degree (d in FIG. 7A) for the crosswalk based on the location information of the first user.

To be more specific, referring to b of FIG. 7A, the service providing apparatus 100 receives a user input requesting to extend a crossing time of the crosswalk from the first user terminal 200 and transmits a control signal to a traffic signal structure of the crosswalk in response to the received extending request to extend the crossing signal as much as a predetermined reference time to assist the user to safely cross the crosswalk. With regard to this, according to the exemplary embodiment of the present disclosure, the extending function of the crossing time of the crosswalk by means of a user input item may be optionally provided based on biographical information of the first user. For example, when the first user corresponds to a wheelchair occupant, an elderly person with limited mobility, or the disabled, the service providing apparatus 100 may control the user input item for extending the crossing time of the crosswalk to be activated in the first user terminal 200.

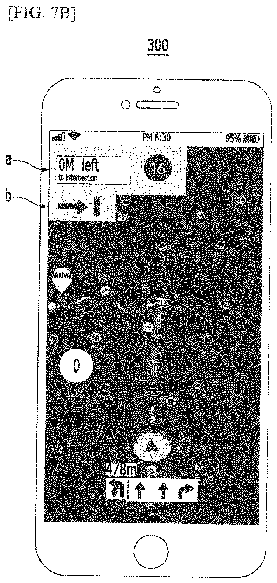

FIG. 7B is a view exemplary illustrating an interface for displaying driving signal information on a second user terminal when a pedestrian crossing signal is applied to a predetermined crosswalk.

Referring to FIG. 7B, when the pedestrian crossing signal is applied to the crosswalk to which the car 2 on which the second user has ridden approaches, the service providing apparatus 100 may provide driving signal information including at least one of left distance information ("0" m denoted by a in FIG. 7B), second display information (b in FIG. 7B) about a road associated with the crosswalk, and left time information (information represented by a number "16" displayed at a right side of a of FIG. 7B) until the crossing signal and the stop signal of the crosswalk are switched to the second user terminal 300.

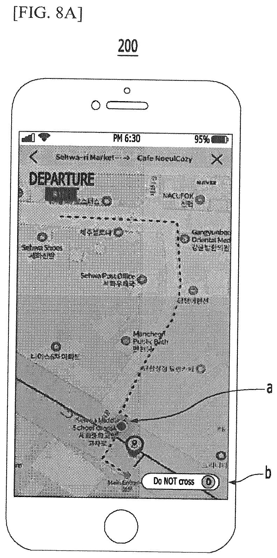

FIG. 8A is a view exemplary illustrating an interface for outputting a first warning signal through a first user terminal.

Referring to FIG. 8A, when it is determined that the first user enters the crosswalk in a state in which the stop signal is displayed for the crosswalk on the route information (for example, determined to attempt jaywalking) based on the walking signal information and the location information of the first user (a of FIG. 8A), the service providing apparatus 100 may output a first warning signal to the first user terminal 200.

To be more specific, referring to FIG. 8A, when it is determined that the first user enters the crosswalk in a state in which the stop signal is displayed, the service providing apparatus 100 may control the map-based guidance interface to be switched to a predetermined warning displaying manner. For example, the service providing apparatus 100 controls the map-based guidance interface to switch a color of the background to red as illustrated in FIG. 8A or to repeatedly flicker the red sign to induce the first user to intuitively recognize that the first user should not cross the crosswalk.

According to the exemplary embodiment of the present disclosure, in a state in which the stop signal is displayed, when it is determined that the first user enters the crosswalk, the service providing apparatus 100 switches the contents of user's approaching/crossing state information (b in FIG. 8A) on the crosswalk which is displayed to overlap the map-based guidance interface to a warning sentence ("DO NOT cross") to allow the user to intuitively recognize that the first user should not cross the crosswalk.

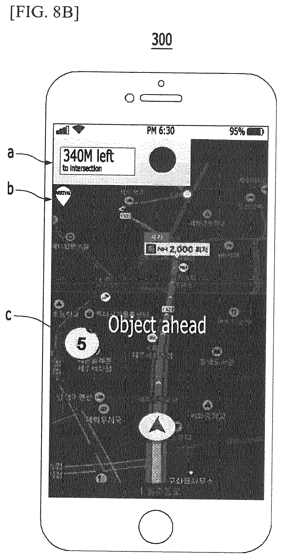

FIG. 8B is a view exemplary illustrating an interface for outputting a third warning signal through a second user terminal.

Referring to FIG. 8B, when it is determined that the first user has already entered the crosswalk or is expected to enter the crosswalk in a state in which the car 2 on which the second user has ridden approaches the crosswalk based on second display information about a road associated with the crosswalk to which the car 2 approaches, location information (that is, the second user's location information) of the car 2 on which the second user has ridden, and moving state information (that is, information including location information of the first user) of another user corresponding to the first type, the service providing apparatus 100 may output a third warning signal informing that a pedestrian is located ahead in the driving direction to the second user terminal 300.

To be more specific, referring to FIG. 8B, the service providing apparatus 100 may control the map-based guidance interface to be switched to a predetermined warning display method. For example, the service providing apparatus 100 displays text type warning information ("object ahead") to overlap the background area of the map-based guidance interface to intuitively recognize that the pedestrian is located ahead or controls the text type waring information to repeatedly flicker to induce the user to intuitively recognize that when the user continues on the road, there may be a risk of accident. However, the above-described warning method is not limited thereto and may be applied to various types such as various visual representing methods, audible guidance methods, or vibration-based warning methods.

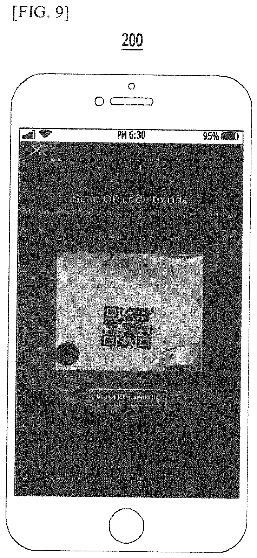

FIG. 9 is a view exemplary illustrating an interface output through a first user terminal to handle the rental of a personal mobility.

Referring to FIG. 9, when it is determined that the first user arrives at a personal mobility rental available location which is reflected to the route information based on the location information of the first user 200, the service providing apparatus 100 may provide a predetermined mobility rental interface for processing a personal mobility rental process to the first user terminal 200.

For example, the mobility rental interface may be an interface for activating a camera module (not illustrated) provided in the first user terminal 200 to read an identifier such as a QR code attached or printed on an outer surface of the personal mobility, but is not limited thereto, and may be provided in various types in consideration of the type of the personal mobility to be rented by the user. As another example, the mobility rental interface may be an interface based on a dedicated application associated with the mobility rental service provided by a mobility operator which has previously entered into an alliance with an operating entity of the integrated navigation system 10.

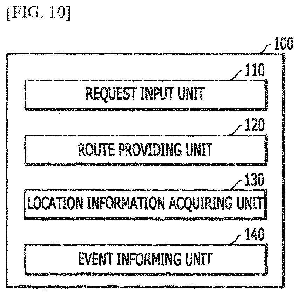

FIG. 10 is a schematic diagram of an integrated navigation service providing apparatus for a car, a mobility, and a pedestrian according to an exemplary embodiment of the present disclosure.

Referring to FIG. 10, the service providing apparatus 100 may include a request input unit 110, a route providing unit 120, a location information acquiring unit 130, and an event informing unit 140.

The request input unit 110 may receive a route providing request including a moving type and a destination of the user from the user terminals 200 and 300.

The route providing unit 120 may transmit route information to reach a set destination to the user terminals 200 and 300 in consideration to the moving type included in the route providing request.

Further, according to the exemplary embodiment of the present disclosure, when the moving type of the user is a first type corresponding to movement by walking and using a personal mobility and a route which is selected by the user or provided to the user includes a moving section using the personal mobility, the route providing unit 120 may provide route information including information about a personal mobility rental available location.

The location information acquiring unit 130 may acquire the location information of the user who moves along the route information.

The event informing unit 140 may provide at least one of the location information of the user, signal information related to the route information provided to the user, and information about an object which affects the movement of the user according to the route information to the user terminals 200 and 300.

Specifically, when the moving type of the user is a first type corresponding to the movement by walking or using the personal mobility and the location information acquired for the user corresponds to an entering location of the crosswalk included in the route information, the event informing unit 140 may provide walking signal information associated with the crosswalk to the first user terminal 200.

Further, when it is determined that the user enters the crosswalk in a state in which the stop signal for the crosswalk is displayed based on the walking signal information and the location information of the user, the event informing unit 140 may output a first warning signal by means of the first user terminal 200.

Further, when it is determined that the car 2 passes the crosswalk in a state in which the user has entered the crosswalk based on the location information of the user and driving state information of the car 2 of the other user corresponding to the second type corresponding to the movement by the car, the event informing unit 140 may output a second warning signal by means of the first user terminal 200.

As another example, when the moving type of the user is a second type corresponding to the movement by the car and the location information of the car 2 of the user corresponds to a proximate location of the crosswalk included in the route information, the event informing unit 140 may provide the driving signal information associated with the crosswalk to the second user terminal 300.

Further, when it is determined that another user has already entered the crosswalk or is determined to enter in a state in which the car 1 of the user is approaching the crosswalk based on second display information about the road associated with the crosswalk and movement state information of the other user corresponding to the first type, the event informing unit 140 may output a third warning signal by means of the second user terminal 300.

Hereinafter, an operation flow of the present disclosure will be described in brief based on the above detailed description.

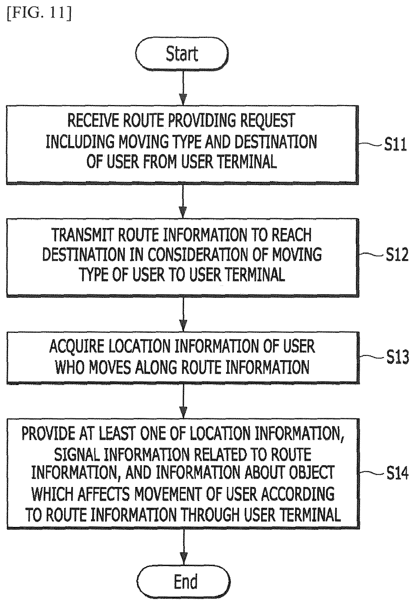

FIG. 11 is an operation flowchart of an integrated navigation service providing method for a car, a mobility, and a pedestrian according to an exemplary embodiment of the present disclosure.

The integrated navigation service providing method for a car, a mobility, and a pedestrian illustrated in FIG. 11 may be performed by the above-described service providing apparatus 100. Therefore, even though some contents are omitted, the contents which have been described for the service providing apparatus 100 may be applied to the description of the integrated navigation service providing method for a car, a mobility, and a pedestrian in the same manner.

Referring to FIG. 11, in step S11, the request input unit 110 may receive a route providing request including a moving type and a destination of the user from the user terminals 200 and 300.

Next, in step S12, the route providing unit 120 may transmit route information to arrive at a set destination to the user terminals 200 and 300 in consideration of the moving type included in the route providing request.

Further, according to the exemplary embodiment of the present disclosure, when in step S12, the moving type of the user is a first type corresponding to movement by walking and using a personal mobility and a route which is selected by the user or provided to the user includes a moving section using the personal mobility, the route providing unit 120 may provide route information including information about a personal mobility rental available location.

Next, in step S13, the location information acquiring unit 130 may acquire location information of a user who moves along the route information provided in step S12.

Next, in step S14, the event informing unit 140 may provide at least one of the location information acquired in step S13, signal information related to the route information, and information about an object which affects the movement of the user according to the route information, by means of the user terminals 200 and 300.

Specifically, when the moving type of the user is a first type corresponding to the movement by walking and using the personal mobility and the location information acquired for the user in step S14 corresponds to an entering location of the crosswalk included in the route information, the event informing unit 140 may provide walking signal information associated with the crosswalk to the first user terminal 200.

Further, when in step S14, it is determined that the user enters the crosswalk in a state in which the stop signal for the crosswalk is displayed based on the walking signal information and the location information of the user, the event informing unit 140 may output a first warning signal by means of the first user terminal 200.

Further, according to the exemplary embodiment of the present disclosure, when in step S14, it is determined that the car 2 passes the crosswalk in a state in which the user has entered the crosswalk based on the location information of the user and driving state information of the car 2 of the other user corresponding to the second type corresponding to the movement by the car, the event informing unit 140 may output a second warning signal by means of the first user terminal 200.

As another example, when the moving type of the user is a second type corresponding to the movement by the car and the location information of the car 2 of the user corresponds to a proximate location of the crosswalk included in the route information in step S14, the event informing unit 140 may provide the driving signal information associated with the crosswalk to the second user terminal 300.

Further, when in step S14, it is determined that another user has already entered the crosswalk or is determined to enter the crosswalk in a state in which the car 2 of the user is approaching the crosswalk based on second display information about the road associated with the crosswalk and movement state information of the other user corresponding to the first type, the event informing unit 140 may output a third warning signal by means of the second user terminal 300.

In the above-description, steps S11 to S14 may be further divided into additional steps or combined as smaller steps depending on an implementation example of the present disclosure. Further, some steps may be omitted if necessary and the order of steps may be changed.

The integrated navigation service providing method for a car, a mobility, and a pedestrian according to the example embodiment may be implemented as a program instruction which may be executed by various computers to be recorded in a computer readable medium. The computer readable medium may include solely a program command, a data file, and a data structure or a combination thereof. The program instruction recorded in the medium may be specifically designed or constructed for the present disclosure or known to those skilled in the art of a computer software to be used. Examples of the computer readable recording medium include a magnetic media such as a hard disk, a floppy disk, or a magnetic tape, an optical media such as a CD-ROM or a DVD, a magneto-optical media such as a floptical disk, and a hardware device which is specifically configured to store and execute the program command such as a ROM, a RAM, and a flash memory. Examples of the program command include not only a machine language code which is created by a compiler but also a high level language code which may be executed by a computer using an interpreter. The hardware device may operate as one or more software modules in order to perform the operation of the present disclosure and vice versa.

Further, the integrated navigation service providing method for a car, a mobility, and a pedestrian may also be implemented as a computer program or an application executed by a computer which is stored in a recording medium.

The above-description of the present disclosure is illustrative only and it is understood by those skilled in the art that the present disclosure may be easily modified to another specific type without changing the technical spirit of an essential feature of the present disclosure. Thus, it is to be appreciated that the embodiments described above are intended to be illustrative in every sense, and not restrictive. For example, each component which is described as a singular form may be divided to be implemented and similarly, components which are described as a divided form may be combined to be implemented.

The scope of the present disclosure is represented by the claims to be described below rather than the detailed description, and it is to be interpreted that the meaning and scope of the claims and all the changes or modified forms derived from the equivalents thereof come within the scope of the present disclosure.

## Claims

1. An integrated navigation service providing method for a car, a mobility, and a pedestrian, comprising:
(a) receiving a route providing request including a moving type and a destination of the user from a user terminal of the user;
(b) transmitting route information to reach the destination in consideration of the moving type to the user terminal;
(c) acquiring location information of the user who moves along the route information; and
(d) providing at least one of the location information, signal information related to the route information, and information about an object which affects the movement of the user according to the route information, by means of the user terminal.

2. The service providing method according to claim 1, wherein the moving type includes a first type corresponding to movement by walking and using a personal mobility and a second type corresponding to movement by a car.

3. The service providing method according to claim 2, wherein when the moving type is the first type and the location information corresponds to an entering location of a crosswalk included in the route information, in step (d), walking signal information associated with the crosswalk is provided to the user terminal.

4. The service providing method according to claim 3, wherein the walking signal information includes first display information including a crossing signal or a stop signal for the crosswalk and left time information to a time when the crossing signal and the stop signal are switched.

5. The service providing method according to claim 4, wherein the step (d) includes:
outputting a first warning signal by means of the user terminal when it is determined that the user enters the crosswalk in a state in which the stop signal is displayed based on the walking signal information and the location information.

6. The service providing method according to claim 4, wherein the step (d) includes:
outputting a second warning signal by means of the user terminal when it is determined that the car passes the crosswalk in a state in which the user has entered the crosswalk based on the location information and driving state information of the car of the other user corresponding to the second type.

7. The service providing method according to claim 2, wherein when the moving type is the second type and the location information corresponds to a proximate location to a crosswalk included in the route information, in step (d), driving signal information associated with the crosswalk is provided to the user terminal.

8. The service providing method according to claim 7, wherein the driving signal information includes at least one of left distance information to the crosswalk, expected arrival time information to the crosswalk, second display information about a road associated with the crosswalk, and left time information to a time when the crossing signal and the stop signal of the crosswalk are switched.

9. The service providing method according to claim 8, wherein the step (d) includes:
outputting a third warning signal by means of the user terminal when the other user has already entered the crosswalk or is determined to enter the crosswalk in a state in which the car of the user approaches the crosswalk, based on the second display information, the location information, and movement state information of the other user corresponding to the first type.

10. The service providing method according to claim 2, wherein when the moving type is the first type, in step (b), the route information including information about a personal mobility rental available location is provided.

11. An integrated navigation service providing apparatus for a car, a mobility, and a pedestrian, comprising:
a request input unit which receives a route providing request including a moving type and a destination of the user from a user terminal of the user;
a route providing unit which transmits route information to reach the destination in consideration of the moving type to the user terminal;
a location information acquiring unit which acquires location information of the user who moves along the route information; and
an event informing unit which provides at least one of the location information, signal information related to the route information, and information about an object which affects the movement of the user according to the route information, by means of the user terminal.

12. The service providing apparatus according to claim 11, wherein when the moving type is a first type corresponding to movement by walking and using a personal mobility and the location information corresponds to an entering location of a crosswalk included in the route information, the event informing unit provides walking signal information associated with the crosswalk to the user terminal.

13. The service providing apparatus according to claim 12, wherein the walking signal information includes first display information including a crossing signal or a stop signal for the crosswalk and left time information to a time when the crossing signal and the stop signal are switched.

14. The service providing apparatus according to claim 11, wherein when the moving type is a second type corresponding to movement by a car and the location information corresponds to a proximate location of a crosswalk included in the route information, the event informing unit provides driving signal information associated with the crosswalk to the user terminal,
particularly wherein the driving signal information includes at least one of left distance information to the crosswalk, expected arrival time information to the crosswalk, second display information about a road associated with the crosswalk, and left time information to a time when the crossing signal and the stop signal of the crosswalk are switched.

15. An integrated navigation system for a car, a mobility, and a pedestrian, comprising:
a first user terminal of a first user who moves according to a first moving type corresponding to movement by walking and using a personal mobility;
a second user terminal of a second user who moves according to a second moving type corresponding to movement by a car; and
a navigation service providing apparatus which receives a route providing request including destinations of the first user and the second user to transmit route information to reach the destination to the first user terminal and the second user terminal, acquires location information of the first user and the second user who move along the route information, and provides at least one of the location information, signal information related to the route information, and information about an object which affects the movement of the first user and the second user to the first user terminal and the second user terminal.
